# EUROPEAN PATENT APPLICATION

(11) **EP 0 609 826 A2**
(43) Date of publication of application: **10.08.1994**
(21) Application number: 94101459.9
(22) Date of filing: 01.02.1994
(51) Int. Cl.: C09J 7/02

(54) **Composite support for a plurality of removable adhesive flat elements suitable to facilitate the selection and/or handling of paper items and the like**

(30) Priority: 05.02.1993 IT MI930094 U
(71) Applicant: Triggianese, Doriano, I-24030 Mapello (Bergamo) (IT)
(72) Inventor: Triggianese, Doriano, I-24030 Mapello (Bergamo) (IT)
(74) Representative: Modiano, Guido, Dr.-Ing.

(57) **Abstract**

Composite structure with removable adhesive elements for facilitating the handling of paper items, constituted by a flat supporting element (1) having a smooth surface and on at least one side whereof a plurality of flat laminar elements (2,3,4) is removably applied; the opposite surfaces of the laminar elements are coated with adhesive material, and one surface of the laminar elements is coated with adhesive material of a removable kind or that has a lower adhesive power than the material present on the opposite surface of the same element; the less adhesive surfaces are applied directly to the supporting element, whereas the opposite surfaces are protected by a continuous plastic film (5) or the like which can be raised so as to allow, after lifting the plastic film, to remove each individual laminar element from the support by virtue of the adhesion by contact of the tip (6) of the index finger on the laminar element.

## Description

The present invention relates to a flat structure which supports a plurality of individually removable adhesive elements which are suitable to facilitate the selection, handling and separation of stacked paper items such as those constituting magazines, books, bank-note bundles and the like.

The practical problems encountered in handling, selecting and/or leafing through paper sheets, especially if they are very thin and packed together, such as for example the pages of magazines, books, newspapers or even bundles of bank notes and the like, are universally known. These difficulties are even greater when the pack of sheets that can be opened out like a book is not stably placed on a table, desk or the like.

In all these cases, in order to be able to easily separate the individual sheets from the underlying ones, one generally resorts to means which in addition to being unpractical and unpleasant are also unhygienic; it is indeed a common habit to moisten with saliva or with a wet sponge the tip of the right index finger and then rest the moistened part on the edge of the pack of sheets, so as to facilitate separation of the first sheet by temporary adhesion of the fingertip to the paper and then allow the partial movement and simultaneous lifting of said sheet from the pack until the edge of the sheet can be gripped between the thumb and the index and then handled or turned over at will.

This operation in practice entails, in addition to the drawbacks described above, other drawbacks as well, including the one due to the fact that the sheet being separated, by virtue of the partial movement of its edge with respect to the underlying pack, is curved upwardly; in some cases, this upward curving can cause even permanent damage to the sheet or otherwise undesirably alter its appearance; furthermore, the fingertip must be moistened very often, practically every time a sheet is separated, since the film of water on the fingertip can perform its adhesive function only for one or two sheets.

Accordingly, the problem arises of providing means for easily and assuredly handling paper sheets stacked in a pack, in the form of a book or the like, which are conceived and structured so as to fully eliminate the practical and hygienic drawbacks of currently used means.

Within the scope of this problem, the aim of the present invention is therefore to provide a composite structure, i.e. a structure with detachable elements, which is configured so as to allow easy separation and overturning or removal of individual sheets from packs of sheets that form books, magazines or the like, or even from stacks of superimposed sheets, such as bundles of bank notes, paper reams and the like, without creasing the sheets or causing damage to them and without having to wet the tip of the index finger.

An object of the present invention is to provide a composite structure with detachable elements, the space occupation whereof being possibly very limited or in any case variable according to the requirements, with the advantage of allowing multiple repeated use of each detachable element.

With this aim in view, as well as these and other objects which will become apparent hereinafter, there is provided, according to the present invention, a composite structure having removable elements which are suitable to facilitate the handling and/or separation of stacked sheets arranged in a book-like manner or the like, said structure being constituted, according to the present invention, by a sheet-like supporting element having a smooth surface and on at least one side whereof a plurality of flat laminar elements is removably applied, the opposite surfaces of said laminar elements being coated with adhesive material, one surface of said laminar elements being coated with adhesive material of a removable kind or having a lower adhesive power than the material present on the opposite surface of said element, the less adhesive surfaces being applied directly to the supporting element, the opposite surfaces being protected by a continuous plastic film or the like which can be raised so as to allow, after lifting said plastic film, to remove each individual laminar element from the support by virtue of the adhesion by contact of the tip of a finger on said laminar element, and to then use in a known manner said finger thus equipped with an adhesive element for handling sheets gathered in a pack, in a book-like manner or the like, as desired.

More particularly, said sheet-like supporting element is constituted by a cardboard sheet, by a rigid plastic or metal plate, or even by a wood panel, the shape of said element being chosen among quadrangular, polygonal, circular or elliptical ones according to the requirements of its application.

Said flat laminar elements are furthermore constituted by double-adhesive elements which are shaped like polygonal laminae or disks, are made of plastics, paper or the like, and have, at least on the side for coupling to the support, an adhesive material commercially known as "removable adhesive" to allow its repeated use on various successive sheets to be handled.

In the same manner, said support can be formed by a rectangular sheet of cardboard or plastics, folded up one or more times so as to form an accordion-like or similar shape, having, on each side or on just one side, a plurality of double-adhesive disks and the associated protective plastic film.

Further characteristics and advantages of the support according to the present invention will become apparent from the following detailed description thereof, given with reference to the accompanying drawings, which are provided merely by way of non-limitative example and wherein:
figure 1 is a perspective view of a composite structure with double-adhesive elements, produced according to the invention;
figure 2 is a median sectional view, taken along the plane II-II of figure 1;
figure 3 is a view of three different types of double-adhesive elements that can be used on the support of figures 1 and 2;
figure 4 is a longitudinal median sectional view of a rectangular support which can be folded up in an accordion-like or similar manner, with double-adhesive elements on one side only;
figure 5 is a view of the same structure of figure 1, but with adhesive elements on both opposite sides; and
figure 6 is a schematic view of the position of the index finger as it couples to a double-adhesive disk to remove it from its support.

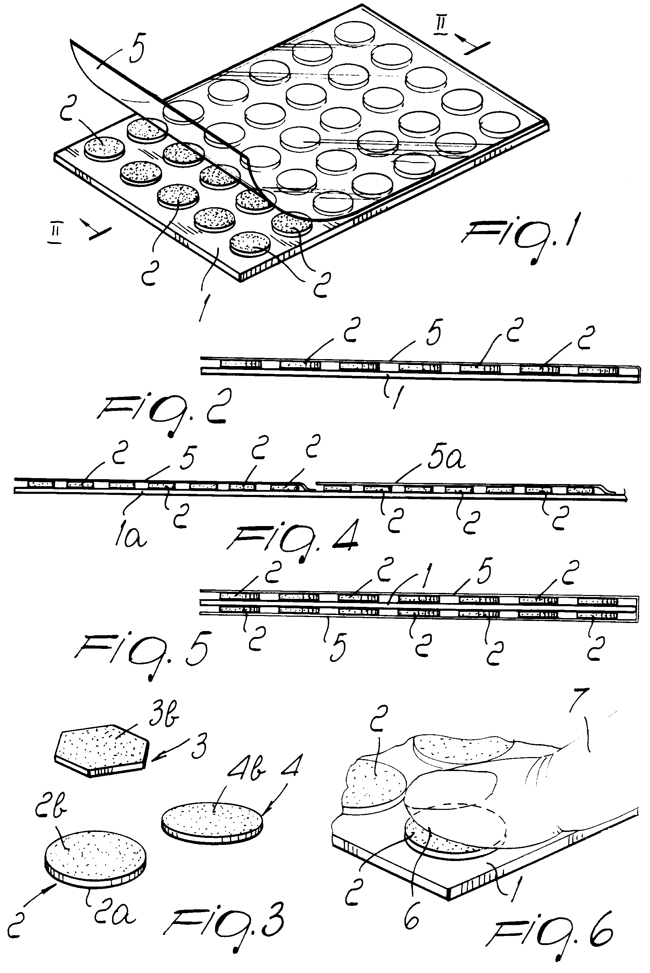

With reference to the above figures, and particularly to figures 1 to 3, the composite structure according to the present invention is constituted by a supporting element 1, constituted by a cardboard sheet, by a lamina of rigid plastic or other material, having a smooth surface and being preferably rectangular but also polygonal or circular.

Several disks 2 made of paper or plastic film, for example polypropylene, are applied on one side of said support 1 in equidistant positions along rows and columns; said disks have a circular shape 2 (or a polygonal shape 3 or an oval shape 4) (figure 3) and are coated with adhesive material on their opposite faces.

More specifically, a known adhesive material, more particularly an acrylic material or the like, commercially known by the conventional term "removable adhesive material", i.e. a material having such adhesion characteristics as to allow multiple reuse (adhesion to the sheets to be handled), i.e. such as to maintain its adhesive properties even after several uses, is applied on the face 2a of each disk that is meant to remain in contact with the surface of the support 1.

An acrylic adhesive having greater adhesive properties is instead applied on the opposite face 2b (3b or 4b) which is meant to remain in view, so as to allow the finger to remove the disk from the support and retain it for a long time on the finger while the sheets of a book, magazine or the like are being handled.

The series of double-adhesive disks 2 (or 3 and 4) is furthermore protected and/or covered by a thin plastic film 5 which is preferably transparent and can be raised as shown in figure 1; said film remains in place on the disks because it is retained by adhesion by the surfaces 2b (or 3b, 4b) and can be partially raised to allow the removal of each individual disk before using it.

Also according to the invention, the flat supporting element can be constituted by a long rectangular piece of cardboard 1a which has said disks 2 (or 3 or 4) on one side, as shown in figure 4, and is then folded up once or more than once in an accordion-like manner; in this case, each element 1a of the accordion-like element has a transparent plastic film 5-5a etc. to easily lift said film after each support 5, 5a etc. has been emptied.

Furthermore, said double-adhesive disks can be formed by a double-adhesive film, i.e. without a paper or plastic core; in this case, the double-adhesive material is made in the shape of a film the mechanical strength whereof is sufficient to withstand its removal from the support by the finger.

This solution is suitable, for example, for offices, for browsing through large files and the like, whereas for occasional use, for example to read newspapers, magazines, books and the like even in uncomfortable conditions it is possible to provide a structure such as the one shown in figure 5. In this case, the disks 2 are placed on both of the opposite sides of the support 1, and the protective plastic film 5 can be a single film wrapped around both sides of said support.

The structure with double-adhesive elements as illustrated and as described above is used by partially lifting the film 5 so as to expose part of the adhesive disks, then placing the tip 6 of a finger, for example of the right index 7, on a disk 2 (figure 6), and removing said disk, which remains fixed to the finger for all the time required to handle the sheets in the conventional manner.

In practice it has been observed that it is not only easy but also very effective to leaf and/or lift individual pages of a book or magazine, since the removable adhesive which is present on the underlying face of the disk that is stuck under the finger allows to move the pages or sheets without folding or creasing them and at the same time allows, with a single disk stuck under one finger, to handle several pages before requiring replacement with another double-adhesive disk.

Obviously, in its practical execution, the invention as described above is susceptible to modifications in the materials employed and in the characteristics and types of adhesive used, in the dimensions of its various components and in their colorings, without abandoning the protective scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Composite structure with removable adhesive elements which are suitable to facilitate the handling of paper items such as the pages of books, magazines, newspapers and the like, characterized in that it is constituted by a sheet-like supporting element (1) having a smooth surface and on at least one side whereof a plurality of flat laminar elements (2,3,4) is removably applied, the opposite surfaces of said laminar elements being coated with adhesive material, one surface of said laminar elements (2,3,4) being coated with adhesive material of a removable kind or that has a lower adhesive power than the material present on the opposite surface of said element, the less adhesive surfaces being applied directly to the supporting element (1), the opposite surfaces being protected by a continuous plastic film (5) or the like which can be raised so as to allow, after lifting said plastic film, to remove each individual laminar element (2,3,4) from the support (1) by virtue of the adhesion by contact of the tip (6) of the index finger or of another finger on said laminar element (2,3,4).

2. Composite structure according to claim 1, characterized in that said supporting element (1) is constituted by a flat sheet or plate made of a material chosen among cardboard, rigid plastics, metallic alloy, wood or the like which has a shape chosen among rectangular, polygonal, circular and oval ones.

3. Composite structure according to claim 1, characterized in that said flat laminar elements (2,3,4) are constituted by laminae shaped like disks (2,4) or polygons (3) and made of paper, plastic film or the like which have, at least on the face that is coupled to the support (1), a layer of an adhesive material of the removable type.

4. Composite structure according to one or more of the preceding claims, characterized in that said double-adhesive disks (2,3,4) are constituted by a film which is entirely adhesive, i.e. has no paper or plastic core.

5. Composite structure according to the preceding claims, characterized in that it can be made in the shape of an accordion or the like in which the double-adhesive disks (2,3,4) are located on one of the faces of the various parts of the accordion-like structure.

6. Composite structure according to the preceding claims, characterized in that it has said double-adhesive disks (2,3,4) on both of its opposite flat faces.
